# EUROPÄISCHE PATENTSCHRIFT

(11) **EP 1 882 094 B1**
(45) Veröffentlichungstag und Bekanntmachung des Hinweises auf die Patenterteilung: **12.08.2015**
(21) Anmeldenummer: 06743389.6
(22) Anmeldetag: 02.05.2006
(51) Int. Cl.: F02D 41/22

(54) **VERFAHREN UND VORRICHTUNG ZUR STEUERUNG EINER ANTRIEBSEINHEIT EINES FAHRZEUGS**
METHOD AND DEVICE FOR CONTROLLING A DRIVE UNIT OF A VEHICLE
PROCEDE ET DISPOSITIF DE COMMANDE D'UNE UNITE D'ENTRAINEMENT DE VEHICULE A MOTEUR

(30) Priorität: 12.05.2005 DE 102005021952
(43) Veröffentlichungstag der Anmeldung: 30.01.2008
(73) Patentinhaber: ROBERT BOSCH GMBH, 70442 Stuttgart (DE)
(72) Erfinder: PITZAL, Volker, 73550 Waldstetten/Wissgoldingen (DE); FROEHLICH, Oliver, 71735 Eberdingen-Hochdorf (DE); GERWING, Wolfram, 74394 Hessigheim (DE); GROSSER, Martin, 70825 Korntal-Muenchingen (DE); LAERMER, Franz, 71263 Weil Der Stadt (DE); SCHULZ, Udo, 71665 Vaihingen/Enz (DE); PROEPPER, Thomas, 72766 Reutlingen (DE)
(86) Internationale Anmeldenummer: PCT/EP2006/061967
(87) Internationale Veröffentlichungsnummer: WO 2006/120128

(56) Entgegenhaltungen:
- DE-A1- 4 228 413
- DE-A1- 19 928 477
- US-A- 5 212 640
- US-A1- 2003 125 864

## Beschreibung

### Stand der Technik

Ein Verfahren bzw. eine Vorrichtung zur Steuerung einer Antriebseinheit eines Fahrzeugs ist aus der DE 199 28 477 bekannt. Dort wird ausgehend von dem Vergleich einer ersten Beschleunigungsgröße, die wenigstens ausgehend vom Betriebszustand der Antriebseinheit berechnet wird und einer zweiten Beschleunigungsgröße ein Fehler im Bereich der Kraftstoffzumessung erkannt. Die zweite Beschleunigungsgröße wird mit einem Beschleunigungssensor erfasst, der die Fahrzeugbeschleunigung unmittelbar detektiert.

Des weiteren ist aus der DE 103 15 410 A1 ein Verfahren und eine Vorrichtung bekannt, bei dem ausgehend von dem gewünschten Moment und dem tatsächlichen Moment der Brennkraftmaschine, dass ausgehend vom Betriebszustand der Brennkraftmaschine berechnet wird, auf Fehler erkannt.

Nachteilig bei beiden Verfahren ist, dass eine genaue Überwachung lediglich mit sehr hohem Aufwand möglich ist. Eine genaue Berechnung des tatsächlichen Moments ausgehend von Betriebszuständen wie beispielsweise der eingespritzten Kraftstoffmenge und der Drehzahl ist sehr aufwendig. Dies gilt insbesondere für moderne Brennkraftmaschinen mit Abgasnachbehandlungssystem bei denen nicht die gesamte Kraftstoffmenge in Moment umgesetzt wird, sondern bei denen ein Teil der eingespritzten Kraftstoffmenge zur Abgasnachbehandlung benötigt wird. Bei solchen Systemen steigt der Aufwand insbesondere im Rahmen der Applikation stark an. D. h. es müssen verschiedene Kennfelder und Kenngrößen für jedes einzelne Fahrzeug erfasst und abgespeichert werden.

Die US 5212640 beschreibt eine Überwachungseinrichtung für ein Kraftfahrzeug bei dem überprüft wird, ob eine ungewollte Querbeschleunigung des Fahrzeugs auftritt. Eine solche Querbeschleunigung tritt beispielsweise beim Schleudern des Fahrzeugs auf. Dieser wird dann durch Ansteuern geeigneter Aktuatoren im Bereich der Bremse entgegengewirkt. Ein solches System wird üblicherweise als ESP bezeichnet.

Die DE 42 28 413 beschreibt ein Verfahren und eine Vorrichtung zur Bestimmung von Fahrzeugmasse und Fahrwiderstand. Die Masse des durch Vortriebskräfte in seine Längsrichtung bewegten Fahrzeugs wird dadurch bestimmt, dass wenigstens eine Längsbeschleunigung an wenigstens zwei unterschiedlichen Zeitpunkten erfasst und die zu diesem Zeitpunkt vorliegenden Vortriebskräfte erfasst werden. Aus der Differenz der Vortriebskräfte und der Differenz der Längsbeschleunigungen wird dann die Fahrzeugmasse bestimmt.

Dadurch, dass die zweite Beschleunigungsgröße eine erste Komponente in Richtung des der Fahrzeuglängsachse und eine zweite Komponente senkrecht zur Fahrzeugslängsachse beinhaltet, ist eine wesentlich genauere und einfachere Überwachung möglich. Dadurch, dass eine Komponente senkrecht zur Fahrzeugsachse berücksichtigt wird, können Bergab- oder Bergauffahrten sicher erkannt und ein entsprechender genauer Beschleunigungswert bestimmt werden. Das heißt die zweite Beschleunigungsgröße wird zur Erkennung des Betriebszustandes verwendet. Die zweite Beschleunigungsgröße dient als zweiter Betriebszustand, bzw. ausgehend von der zweiten Beschleunigungsgröße wird der Betriebszustand erkannt.

Besonders vorteilhaft ist es, wenn die zweite Beschleunigungsgröße mittels eines geeigneten Sensors gemessen wird. Solche Beschleunigungssensoren stehen kostengünstig zur Verfügung. Entsprechende Beschleunigungssensoren werden beispielsweise bei anderen Systemen wie bei einem ABS- oder einem ESP-System verwendet. Diese Sensoren liefern Beschleunigungsgrößen mit mehreren Komponenten. Insbesondere mit einer Komponente in Richtung der Fahrzeuglängsachse und in Richtung senkrecht zur Fahrzeuglängsachse.

Besonders vorteilhaft ist es, wenn lediglich ein einfacher Sensor verwendet wird, der nur die Beschleunigung in Fahrzeuglängsachse erfasst und die zweite Komponente mittels anderer Größen berechnet wird. Beispielsweise kann die zweite Komponente mittels eines Neigungssensors in einfacher Weise ermittelt werden. Alternativ kann auch vorgesehen sein, dass aus einem Signal, das den Atmosphärendruck und/oder die Atmosphärendruckänderung charakterisiert, oder aus einem GPS-Signal ein entsprechender Wert abgeleitet wird.

Besonders vorteilhaft ist es, wenn zur Bestimmung der ersten Beschleunigungsgröße die Fahrzeugmasse, die einen wesentlichen Einfluss auf die Beschleunigung besitzt, verwendet wird.

Vorteilhaft ist es, wenn als Betriebszustand der Antriebseinheit wenigstens die eingespritzte Kraftstoffmenge charakterisierende Größe berücksichtigt wird. Eine solche, die eingespritzte Kraftstoffmenge charakterisierende Größe ist beispielsweise die Dauer der Ansteuerung eines Stellelementes bzw. der Winkel, den die Kurbel und/oder Nockenwelle während der Ansteuerung überstreicht. Neben diesen Größen können auch andere die eingespritzte Kraftstoffmenge charakterisierende Größen, die vorzugsweise intern im Steuergerät vorliegenden, verwendet werden.

In einer einfachen Ausgestaltung wird von einer festen Fahrzeugmasse ausgegangen. Eine wesentliche Verbesserung der Überwachung ergibt sich wenn jeweils die aktuelle Fahrzeugmasse ermittelt und zur Überwachung verwendet wird. Besonders vorteilhaft ist es, wenn die Fahrzeugmasse in bestimmten Betriebszuständen wenigstens ausgehend von den fahrzeugspezifischen Kenngrößen und der Beschleunigung berechnet werden.

Mittels des beschriebenen Verfahrens und der beschriebenen Vorgehensweise ist eine direkte Überwachung des Fahrzeugs auf ungewollte Beschleunigungen möglich. Durch das Verfahren ergibt sich eine deutliche Verringerung der Komplexität der Überwachung des Steuergeräts, insbesondere gilt dies für die Funktionsüberwachung. Entwicklungs- und Applikationszeiten und Kosten sind deutlich verringert, dabei kann gleichzeitig die Zuverlässigkeit und die Genauigkeit deutlich erhöht werden. Das erfindungsgemäße Verfahren ist vom Verbrennungsverfahren und der Antriebsart unabhängig und kann dabei bei allen Antrieben von Fahrzeugen, wie insbesondere Dieselfahrzeugen, Benzinmotoren, Elektro- und Hybridantrieben verwendet werden.

### Zeichnung

Ausführungsbeispiele der Erfindung sind in den Zeichnungen dargestellt und werden in der nachfolgenden Beschreibung näher erläutert. Es zeigen
- Figur 1: ein Blockdiagramm der erfindungsgemäßen Vorrichtung,
- Figur 2 und 3: Flussdiagramme zur Verdeutlichung der erfindungsgemäßen Vorgehensweise.

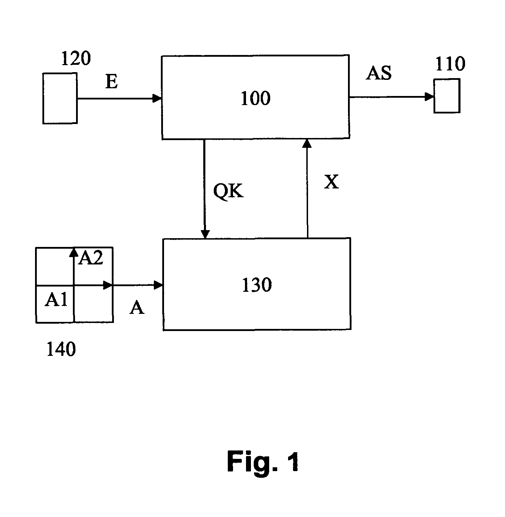

In der Figur 1 ist eine Vorrichtung zur Steuerung einer Antriebseinheit eines Fahrzeugs dargestellt. Im Folgenden wird die erfindungsgemäße Vorgehensweise am Beispiel einer Dieselbrennkraftmaschine beschrieben. Die erfindungsgemäße Vorgehensweise ist dabei nicht auf eine Dieselbrennkraftmaschine begrenzt. Sie kann grundsätzlich bei allen Antrieben von Fahrzeugen verwendet werden. Dabei müssen lediglich die entsprechenden Stellgrößen und Eingangsgrößen verwendet werden.

Mit 100 ist eine Steuereinheit bezeichnet. Diese steuert ein Stellelement 110 an, dass beispielsweise die einzuspritzende Kraftstoffmenge beeinflusst. Bei diesem Stellelement 110 handelt es sich beispielsweise um ein Magnetventil oder ein Piezoaktor, der die einzuspritzende Kraftstoffmenge über einen Injektor eines Common-Rail-Systems oder über einer Pumpedüse festlegt. Das Ansteuersignals AS, mit dem die Steuereinheit 100 das Stellelement 110 beaufschlagt, wird ausgehend von verschiedenen Eingangsgrößen E, mit dem die Steuereinheit 100 von verschiedenen Sensoren 120 beaufschlagt wird, ermittelt.

Solche Anordnungen sind aus dem Stand der Technik weitestgehend bekannt. Erfindungsgemäß ist nun vorgesehen, dass eine Überwachungseinheit 130 mit der Steuereinheit 100 Signale QK und X austauscht. Des weiteren wird der Überwachungseinheit 130 das Signal A eines Beschleunigungssensors 140 zugeleitet.

Ausgehend von den Eingangsgrößen E, die den Zustand des Fahrzeugs bzw. den Betriebszustand der Antriebseinheit charakterisieren, berechnet die Steuereinheit 100 das Ansteuersignal AS zur Ansteuerung des Stellelements 110. Abhängig von dem Ansteuersignal des Stellelements 110 wird der Brennkraftmaschine eine bestimmte Kraftstoffmenge zugemessen.

Zur Überwachung der Antriebseinheit ist nun vorgesehen, dass die Überwachungseinheit 130 ausgehend von dem Vergleich einer ersten Beschleunigungsgröße mit einer zweiten Beschleunigungsgröße einen Fehler erkennt. Die erste Beschleunigungsgröße wird dabei ausgehend vom Betriebszustand der Antriebseinheit berechnet. Den Betriebszustand der Antriebseinheit charakterisiert insbesondere die eingespritzte Kraftstoffmenge QK. Anstelle der Kraftstoffmenge QK können auch beliebige andere Größen, die die Kraftstoffmenge charakterisieren, verwendet werden. Dies gilt insbesondere für die Ansteuerdauer des Stellelements oder den Ansteuerwinkel für den das Stellelement angesteuert wird. Alternativ zu diesen Größen können alle Größen, die in der Steuereinheit 100 vorliegen, und die Kraftstoffmenge charakterisieren, verwendet werden.

Ausgehend von diesen Größen bezüglich des Betriebszustands berechnet die Überwachungseinheit 130 eine erste Beschleunigungsgröße AW. Der Beschleunigungssensor 140 liefert eine zweite Beschleunigungsgröße A die der tatsächlichen Beschleunigung entspricht. Ausgehend von dem Vergleich dieser beiden Beschleunigungsgrößen erkennt die Überwachungseinrichtung auf Fehler. Insbesondere erkennt die Überwachungseinrichtung auf Fehler, wenn die tatsächliche Beschleunigungsgröße A größer als die erste Beschleunigungsgröße AW, d. h. die gewünschte Beschleunigungsgröße ist.

Der Beschleunigungssensor 140 ist dabei derart ausgebildet, dass er zwei Signale liefern kann, wobei die erste Komponente A1 des Signals die Beschleunigung in Richtung der Fahrzeuglängsachse und die zweite Komponente A2 die Beschleunigung senkrecht zur Fahrzeuglängsachse angibt.

Die erste Beschleunigungsgröße AW, die der gewünschten Beschleunigung des Fahrzeugs entspricht, wird ausgehend von den auf das Fahrzeug einwirkenden Kräfte und der Fahrzeugmasse M gemäß der Formel: AW = F / M berechnet. Dabei ist F die Kraft, die auf das Fahrzeug einwirkt und M die Masse des Fahrzeugs. Hierzu ist es erforderlich, dass die Masse M des Fahrzeugs bekannt ist.

Bei einer vereinfachten Ausgestaltung ist vorgesehen, dass die Masse M als fester Wert, der das Fahrzeug charakterisiert, vorgegeben ist. Da in der Regel die Masse des Fahrzeugs im Betrieb größer ist, als die Fahrzeugmasse im Leerzustand, ergibt sich im Vergleich zur gewünschten allenfalls eine zu kleine reale Beschleunigung. Dies führt allenfalls dazu, dass die gemessene Beschleunigung kleiner der gewünschten Beschleunigung ist und somit auch nicht fälschlicherweise auf Fehler "ungewollte Beschleunigung" erkannt wird. Ein auftretender Fehler wird aber in jedem Fall sicher erkannt wenn die gemessene Beschleunigung größer der gewünschten Beschleunigung ist.

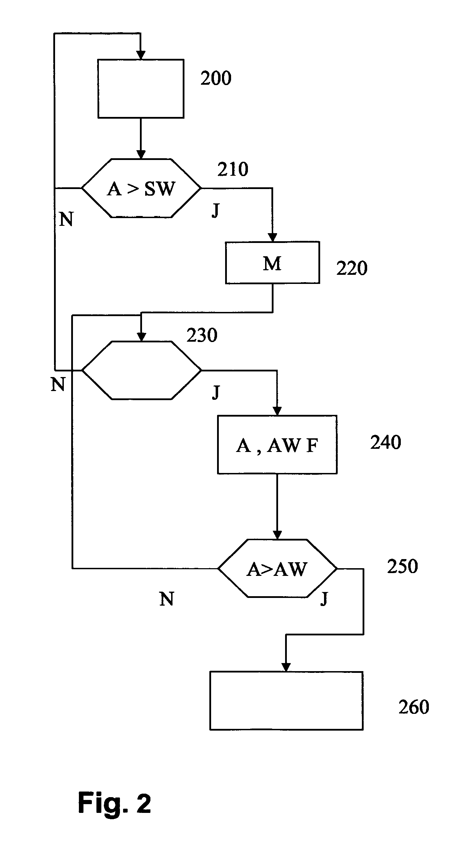

Jede genauere Fahrzeugmassenbestimmung verbessert die Erkennung auf "ungewollte Beschleunigung". Bei einer verbesserten Ausführungsform wird die Fahrzeugmasse in bestimmten Zuständen ermittelt und zur Überwachung verwendet. Eine entsprechende Vorgehensweise ist in Figur 2 beschrieben. In einem ersten Schritt 200 wird erkannt, ob das Fahrzeug steht. Eine Abfrage 210 überprüft, ob eine Beschleunigung des Fahrzeugs vorliegt. Hierzu wird insbesondere das Ausgangssignal des Beschleunigungssensors 140 ausgewertet. Erkennt die Abfrage 210, dass keine Beschleunigung vorliegt, so erfolgt erneut Schritt 200. Erkennt die Abfrage 210 das eine Beschleunigung des Fahrzeugs vorliegt, dies wird beispielsweise dadurch erkannt, dass das Ausgangssignal A des Beschleunigungssensor 140 und dort insbesondere die Komponente A1 in Fahrtrichtung größer als ein Schwellenwert SW ist, so folgt Schritt 220.

In Schritt 220 wird wie im Folgenden beschrieben, die Fahrzeugmasse M ermittelt. Anschließend erfolgt die Abfrage 230. Die Abfrage 230 überprüft, ob das Fahrzeug fährt. Ist dies der Fall, so folgt 240. In diesem Schritt werden sowohl die Kraft F, die auf das Fahrzeug einwirkt als auch die Beschleunigung AW, die gewünscht wird, und die Beschleunigung A, die vom Beschleunigungssensor ermittelt wird, erfasst. Die anschließende Abfrage 250 überprüft ob ein Fehler vorliegt. Insbesondere wird überprüft, ob die tatsächliche Beschleunigung A, die mit dem Beschleunigungssensor 140 gemessen wird, größer ist als die gewünschte Beschleunigung AW. Ist dies der Fall, so wird in Schritt 260 auf Fehler erkannt. Ist dies nicht der Fall, so erfolgt erneut die Abfrage 230. Erkennt die Abfrage 230 dass das Fahrzeug nicht fährt, so wird zu Schritt 200 übergegangen.

Erfindungsgemäß wird nach jedem Stillstand, bei der ersten Beschleunigung die Fahrzeugmasse M berechnet. Während des nachfolgenden Fahrbetriebs des Fahrzeugs wird diese Masse zur Berechnung der gewünschten Beschleunigung AW verwendet. Die gewünschte Beschleunigung AW ergibt sich ausgehend von den Kräften, die auf das Fahrzeug einwirken. Wird erkannt, dass das Fahrzeug ungewollt beschleunigt, so wird auf Fehler erkannt. Ein erkannter Fehler wird über das Signal X an die Steuereinheit zurückgemeldet.

Die Neuberechnung der Fahrzeugmasse nach jedem Start hat eine deutliche Verbesserung der Genauigkeit des Verfahrens zur Folge. Dabei wird berücksichtigt, dass üblicher Weise eine Erhöhung oder Verringerung der Masse nur dann erfolgt, wenn das Fahrzeug steht. Eine Veränderung der Masse beim Fahren in einem Umfang, der auf die Fehlerüberwachung Einfluss nehmen kann, ist äußerst unwahrscheinlich.

Erfindungsgemäß wird durch den Vergleich von der gemessenen Beschleunigung A längs zum Fahrzeug mit der vom Steuergerät berechneten Beschleunigung AW auf den Einfluss der Brennkraftmaschine bzw. des Einspritzsystems im Steuergerät geschlossen und anhand der im folgenden beschriebenen Plausibilisierung auf ein fehlerhaft oder korrekt funktionierendes Steuergerät einschließlich dessen Peripherie, wie beispielsweise Sensoren und Steller oder deren Funktion, geschlossen.

Die Änderung der Fahrzeugbeschleunigung ist abhängig von verschiedenen Einflussgrößen, wie von der Änderung des Motormoments und der Änderung der Fahrwiderstände. In den Fahrwiderstand gehen insbesondere ein der Rollwiderstand, der Luftwiderstand und der Steigungswiderstand Der Übertragungswiderstand des Triebstranges wird als konstant angenommen. Eine Änderung der Witterungsverhältnisse, der Fahrbahngegebenheiten und des Rollwiderstandes ist von geringen Einfluss und wird bei einer einfachen Form nicht berücksichtigt. Bei einer verbesserten Ausführungsform können diese durch geeignete Sensoren erfasst und berücksichtigt werden. Um eine Fehlererkennung zu ermöglichen, die ungewollte Beschleunigungen erkennt, ist der Vergleich zwischen einer berechneten Sollbeschleunigung und der gemessenen Istbeschleunigung bzw. ein Vergleich zwischen einer Sollbeschleunigungsänderung und einer Istbeschleunigungsänderung notwendig. Zur Berechnung der Sollbeschleunigung bzw. der Sollbeschleunigungsänderung wird die Fahrzeugmasse benötigt.

Bei einer einfachen Ausführungsform ist vorgesehen, dass als Masse das Fahrzeugleergewicht verwendet wird, da jegliche Massenerhöhung zu einer trägeren Fahrzeugreaktion führt. Eine verbesserte Ausführungsform benötigt eine Massenbestimmung. Erfindunggemäß erfolgt die Bestimmung und Speicherung der Fahrzeugmasse nur dann, wenn eine vorherige Prüfung auf ungewollte Beschleunigung keine entsprechende ungewollte Beschleunigung erkannt hat.

Zur Plausibilisierung der verschiedenen Signale und zur Fehlererkennung wird wie folgt vorgegangen: Erfindungsgemäß werden verschiedene Fahrzustände unterschieden und in den unterschiedlichen Fahrzuständen unterschiedliche Signale und Größen miteinander verglichen.

Im normalen Fahrbetrieb, d. h. wenn die Abfrage 230 erkennt, dass das Fahrzeug fährt, überprüft eine erste Abfrage 300, ob das Fahrzeug in der Ebene fährt. Dies wird beispielsweise durch auswerten des Beschleunigungssensors, wobei die erste und die zweite Komponente ausgewertet werden, erkannt. Erkennt der Beschleunigungssensor eine Änderung des Betrags der Beschleunigung in Richtung der Längsachse des Fahrzeugs und erkennt gleichzeitig Beschleunigungssensor senkrecht zum Fahrzeug keine Beschleunigung, so erkennt die Abfrage 300 den Zustand "Fahren in der Ebene". Ist dies der Fall, so überprüft die Abfrage 310, ob der Schubbetrieb vorliegt.

Ist dies der Fall, das heißt das Fahrzeug fährt in der Ebene im Schubbetrieb,so wird in Block 410 überprüft, ob ein Fehler vorliegt. In diesem Zustand, bei dem sich das Fahrzeug im Schubbetrieb in der Ebene bewegt, muss beim Einsetzen des Schubbetriebs eine negative Beschleunigung des Sensorelements längs zur Fahrzeugachse gemessen werden, da in diesem Zustand das Fahrzeug seine Geschwindigkeit verlangsamt. Kommt es in diesem Zustand zu einer positiven Beschleunigung des Fahrzeugs, die durch das Sensorelement längs zum Fahrzeug gemessen wird, so wird auf Fehler erkannt. In diesem Fall wird vorzugsweise als Notfahrmaßnahme die Einspritzung abgestellt, da ein sicherheitskritischer Fahrzustand vorliegt.

Der Schubbetrieb wird in Schritt 310 vorzugsweise dadurch erkannt, dass ein nicht betätigtes Fahrpedal vorliegt. Alternativ kann auch ein anderes Signal verwendet werden, dass den Momentenwunsch anzeigt. D. h. die Abfrage 310 überprüft, ob ein Momentenwunsch vorliegt. Ist dies nicht der Fall, so muss beim Eintritt dieses Fahrzustandes auf der Ebene eine Verzögerung des Fahrzeugs erzeugen.

Erkennt die Abfrage 310 kein Schubbetrieb, so wird in Schritt 320 überprüft, ob die Kupplung betätigt oder nicht betätigt ist bzw. bei einem Automatikgetriebe wird überprüft, ob der Wandler offen oder geschlossen ist. Entsprechende Signale liegen üblicher Weise in der Steuereinheit vor und werden entsprechend ausgewertet.

Ist nicht ausgekuppelt, d. h. das Fahrzeug bewegt sich im normalen Fahrzustand in der Ebene, so werden in Block 420 wie folgt die Signale auf Plausibilität überprüft. In diesem Zustand regelt der Fahrer durch die Pedalstellung, dass für die gewünschte Beschleunigung notwendige Wunschmoment. Kommt es zu einer Änderung des Betrags der Komponente der Beschleunigung in Richtung zur Fahrzeuglängsachse, ohne das der Fahrer den Pedalwert nennenswert geändert hat, so ist von einem Fehler auszugehen. Das heißt übersteigt die Änderung der Komponente A2 einen Schwellenwert und ist gleichzeitig die Änderung des Fahrerwunsches kleiner als ein Schwellenwert, so liegt ein Fehler vor.

Falls das Fahrzeug weiter ungewollt beschleunigt, wird der Fahrer in üblicher Weise die Betätigung des Fahrpedals zurücknehmen. Dies hat zur Folge, dass nach einer gewissen Zeit der Schubbetrieb erkannt wird, d. h. es wird in den Block 410 übergegangen. Selbst bei einem nicht erkannten Fehler im Block 420 wird durch die übliche Reaktion des Fahrers erreicht, dass eine zweite Überwachung greift und der Fehler sicher erkannt wird.

Alternativ zur Auswertung der Änderung des Beschleunigungswertes kann auch wie folgt vorgegangen werden: die Kraft, die vom Motor aufgebracht, wird vom Steuergerät anhand der eingespritzten Kraftstoffmenge berechnet. Diese Kraft wird um äußere Fahrwiderstände, wie Rollwiderstand und Luftwiderstand und Triebstrangsverluste verringert. Die verbleibende Kraft führt zu einer Beschleunigung des Fahrzeuges. Ausgehend von der Masse des Fahrzeugs und dieser Kraft kann die gewünschte Beschleunigung berechnet werden. Die entsprechenden Größen wie beispielsweise die Kraftstoffmenge oder der Fahrerwunsch ausgehend von denen die Motorkraft berechnet wird, liegen in der Steuereinheit vor. Andere Größen wie Triebstrangverluste, Rollwiderstand und Luftwiderstand sind bekannt bzw. sind fahrzeugtypisch und werden einmal bei der ersten Inbetriebnahme des Fahrzeugs ermittelt bzw. nehmen einen festen Wert an und sind in einem Speicher abgelegt.

Eine weitere Verbesserung ergibt sich, wenn der Kurvenwiderstand berücksichtigt wird. Ein entsprechender Kurvenwiderstand und eine entsprechende Kurvenfahrt kann anhand eines Gierratensensors oder eines Lenkwinkelsensors im Fahrzeug erkannt und berücksichtigt werden. Somit ergibt sich ausgehend von der verbleibenden Antriebskraft F und der Fahrzeugmasse M die gewünschte Beschleunigung AW gemäß der Formel AW = F / M. Diese so berechnete gewünschte Beschleunigung AW wird bei der gemessenen Beschleunigung A1 des Sensorelements längs zum Fahrzeug verglichen. Unter Berücksichtigung von Toleranzen, Ungenauigkeit ergibt sich eine Differenz. Ist diese Differenz der beiden Beschleunigungen größer als ein applizierbarer Schwellwert, so erkennt die Überwachungseinheit auf Fehler.

Erkennt die Abfrage 320, dass die Kupplung ausgekuppelt bzw. der Wandler offen ist, so erfolgt in Block 430 die folgende Überprüfung. Bei einer Fahrt in der Ebene bei offenem Wandler oder betätigter Kupplung wird die Brennkraftmaschine im Leerlaufdrehzahl durch den Leerlaufdrehzahlregler der Steuereinheit 100 gehalten. Bei einem Fehler würde dies nicht zu einer Beschleunigung des Fahrzeugs führen und kann daher nicht durch die Überwachungseinheit 130 erkannt werden. In diesem Fall würde eine übliche Überwachung der Leerlaufdrehzahl einen entsprechenden Fehler erkennen.

Erkennt die Abfrage 300, dass das Fahrzeug nicht in der Ebene fährt, so folgt die Abfrage 330. Diese Abfrage prüft, ob das Fahrzeug bergab fährt. Das Auftreten einer Beschleunigung während der Bergfahrt in Folge eine Fehlers kann deutlich von einem Beschleunigen in Folge der Hangabtriebskräfte in Folge der Fahrzeugmasse und dem Steigungswinkel unterschieden werden. Die Motorkraft wird von der Überwachungseinheit 130 anhand der eingespritzten Kraftstoffmenge QK berechnet. Abzüglich der äußeren Fahrwiderstände, der Triebstrangverluste ergibt die verbleibende Kraft eine Beschleunigung oder Verzögerung des Fahrzeugs. Die zulässige Beschleunigung AW wird von der Überwachungseinheit 130 aus der verbleibenden Antriebskraft, und der Fahrzeugmasse M berechnet. Im Wesentlichen unterscheidet sich diese Vorgehensweise bei der Bergabfahrt dadurch, dass als zusätzliche Kraft die Hangabtriebskraft berücksichtigt wird. Ausgehend von der Fahrzeugmasse und dem Steigungswinkel kann bei einer Bergabfahrt eine Beschleunigung in Folge der Hangabtriebskräfte deutlich von einer Beschleunigung, die durch ein Fehler in der Steuereinheit verursacht ist, unterschieden werden. Erfindungsgemäß wird auch bei der Bergabfahrt die Motorkraft von der Überwachungseinheit 130 anhand der eingespritzten Kraftstoffmenge QK berechnet. Unter Berücksichtung der äußeren Fahrwiderstände, wie beispielsweise Rollwiderstand und Luftwiderstand, der Triebstrangverluste und der Hangabtriebskraft ergibt sich die verbleibende Kraft und eine Beschleunigung oder Verzögerung des Fahrzeugs. Ausgehend von diesen Größen wird die gewünschte bzw. zulässige Beschleunigung AW von der Überwachungseinheit 130 unter Berücksichtigung der Fahrzeugmasse berechnet. Weicht diese gewünschte Beschleunigung von der gemessenen Beschleunigung A ab, die mit dem Sensor 140 erfasst wird, insbesondere mit der Komponente A1 in Richtung der Fahrzeugachse, so wird auf Fehler erkannt. Vorzugsweise wird die Differenz der beiden Beschleunigungen, d. h. die Differenz zwischen der gewünschten und der gemessenen Beschleunigung berechnet. Liegt diese Differenz über einer applizierten Schwelle, so wird auf Fehler erkannt.

Erkennt die Abfrage 330, dass eine Bergabfahrt erfolgt, überprüft die Abfrage 340, ob der eingekuppelte Zustand vorliegt. Ist dies nicht der Fall, d. h. die Kupplung ist betätigt bzw. der Wandler eines Automatikgetriebes ist offen, wird dies von der Überwachungseinheit 130 erkannt In diesem Fall bleiben die Kompressionskräfte des Motors ohne Einfluss und das Fahrzeug wird aufgrund der Hangabtriebskraft beschleunigt. Die Brennkraftmaschine wird durch den Leerlaufdrehzahlregler der Steuereinheit 100 im Leerlaufdrehzahlband gehalten. Tritt in diesem Zustand ein Fehler auf, so wird das Fahrzeug nicht beschleunigt, d. h. dieser Fehler kann durch die erfindungsgemäße Vorgehensweise noch nicht erkannt werden. Dieser Fehler wurde aber dadurch erkannt, dass die Drehzahl im Leerlauffall größer als die Leerlaufdrehzahl ist.

Erkennt die Abfrage 330, dass keine Bergabfahrt erfolgt, so folgt Schritt 470. Die Fehlerüberwachung kann hier entsprechend wie ab Abfrage 310 beschrieben erfolgen. Das heißt die Überprüfung bei der Fahrt in der Ebene oder Berauf unterscheidet sich nur unwesentlich. Bei der Fahrt bergauf kann die Hangabtriebskraft als zusätzliche Kraft, die der Bewegung entgegenwirkt berücksichtigt werden.

Erkennt die Abfrage 340, dass der eingekuppelte Zustand vorliegt, so erfolgt die weitere Abfrage 350, ob der Motor sich im Schubbetrieb befindet. Ist dies der Fall, hat eine Änderung des Steigungswinkels einen Einfluss auf den Fahrwiderstand. Dies bedeutet bei der Bergabfahrt im Motorschub kommt es zu einer Fahrzeugbeschleunigung, wenn die Fahrzeuggewichtskraft in Folge des Steigungswinkels in Fahrtrichtung die Fahrwiderstände einschließlich des Übertragungswirkungsgrades des Triebstranges und der Kompressionskraft des Motors überwunden hat. Fällt die Motordrehzahl unter die Leerlaufdrehzahl, so bewirkt der Leerlaufdrehzahlregler der Steuereinheit 100, dass soviel Kraftstoff eingespritzt wird, dass die Leerlaufdrehzahl im Leerlaufdrehzahlband gehalten wird. D. h. das Fahrzeug wird beschleunigen, bis die obere Drehzahlgrenze des Leerlaufdrehzahlreglerbandes erreicht ist.

Erkennt die Abfrage 350, dass kein Schubbetrieb vorliegt, d. h. dass im eingekuppelten Fahrzustand bei Bergabfahrt der Fahrer eine Beschleunigung wünscht, so regelt der Fahrer durch die Pedalstellung das für die gewünschte Beschleunigung notwendige Wunschmoment. Bei einem Fehler, bei dem es zur Einspritzungen kommt, würde das Fahrzeug ungewollt beschleunigen. Wenn das Fahrzeug weiter ungewollt beschleunigt, läst der Fahrer das Fahrpedal los, das Steuergerät erkennt auf Schubbetrieb.

Erfindungsgemäß wird ausgehend von verschiedenen Größen, die im Steuergerät vorliegen, z. B. Kupplung betätigt oder nicht betätigt, und mit Sensoren erfassten Größen verschiedene Betriebszustände erkannt. In diesen Betriebszuständen werden die Kräfte, die auf das Fahrzeug wirken, ermittelt und ausgehend von dieser ermittelten Kraft und der Fahrzeugmasse eine gewünschte bzw. zulässige Beschleunigung AW bestimmt. Diese gewünschte Beschleunigung wird mit der tatsächlichen Beschleunigung A verglichen. Die tatsächliche Beschleunigung wird vorzugsweise mittels des Sensors 140 erfasst wobei hierbei die Komponente A1 der Beschleunigung in Richtung der Fahrzeuglängsachse berücksichtigt wird. Die zweite Komponente A2 der Beschleunigung senkrecht zur Fahrzeuglängsachse wird dabei zur Unterscheidung des Zustandes des Fahrzeugs insbesondere zum Erkennen, ob das Fahrzeug bergab, bergauf oder in der Ebene fährt, verwendet. Stehen noch weitere Sensoren, die Beschleunigungen erkennen zur Verfügung, so können noch weitere Kräfte, die auf das Fahrzeug einwirken, berücksichtigt werden. So kann beispielsweise mittels eines Sensors quer zur Fahrzeuglängsachse eine Kurvenfahrt und die dabei auftretenden Kräfte ermittelt und berücksichtigt werden.

Die Fahrzeugmasse ist eine wesentliche Größe, die in die Berechnung der Beschleunigung eingeht. Deshalb ist erfindungsgemäß vorgesehen, dass bei einer einfachen Ausführungsform eine feste Masse berücksichtigt wird. Bei einer verbesserten Ausführungsform ist vorgesehen, dass in bestimmten Betriebszuständen die Masse des Fahrzeugs jeweils neu ermittelt und anschließend im Fahrbetrieb zur Berechnung der Beschleunigung berechnet wird. Besonders vorteilhaft hat sich herausgestellt, dass bei jedem Anfahren bzw. beim ersten Beschleunigen des Fahrzeugs aus dem Stand heraus die Fahrzeugmasse zu ermitteln ist. Bei der Ermittlung der Fahrzeugmasse werden die gleichen Größen wie zur Fehlererkennung verwendet.

Vorzugsweise ist vorgesehen, dass in einem ersten Schritt eine grobe Überprüfung dahingehend erfolgt, ob ein Fehler vorliegt. Dies kann beispielsweise dadurch erfolgen, dass mittels der Masse des Fahrzeugs im Leerzustand eine Überprüfung erfolgt. Liefert diese das Ergebnis, dass kein Fehler vorliegt, wird die Fahrzeugmasse ausgehend von den entsprechenden Größen bestimmt und anschließend zur Fehlerüberwachung verwendet. Alternativ kann anstelle des Leergewichts auch die beim Abstellen zuletzt verwendete Masse als Fahrzeugmasse oder ein fester Wert für die Masse verwendet werden. Dabei ist vorzusehen, dass die Schwellwerte bei deren Überschreiten Fehler erkannt wird, entsprechend größere Toleranzen aufweisen müssen.

Anschließend wir der genaue Wert der momentanen Fahrzeugmasse berechnet. Im weiteren Betrieb erfolgt die eine sehr genaue Fehlerüberwachung ausgehend von diesem genauen Wert der momentanen Fahrzeugmasse.

Besonders vorteilhaft hierbei ist, dass sowohl zur Ermittlung der Fahrzeugmasse in ausgewählten Betriebszuständen als auch zur Fehlerüberwachung die gleichen Zusammenhänge und Beziehungen zwischen den Messgrößen, den Konstanten und den zu bestimmenden Größen verwendet werden. Das heißt ausgehend von bestimmten Beziehungen wird nach dem Start bzw. nach dem Losfahren die Masse des Fahrzeugs ermittelt. Dabei wird davon ausgegangen, dass noch kein Fehler vorliegt. Die Überwachung auf ungewollte Beschleunigung findet bis dahin mit den Initial-Werten statt. Als solcher Initial-Wert wird beispielsweise die Fahrzeugmasse im Leerzustand verwendet. Anschließend bei der Fahrt des Fahrzeugs ausgehend von den selben Beziehungen wird die gewünschte Beschleunigung AW des Fahrzeugs berechnet. Diese gewünschte Beschleunigung wird dann mit der gemessenen Beschleunigung A plausibilisiert. Dabei können beide Komponenten des Signals des Beschleunigungssensors zur Ermittlung des Betriebszustandes, zur Ermittlung der Masse des Fahrzeugs und/oder zur Ermittlung der gemessenen Beschleunigung verwendet werden.

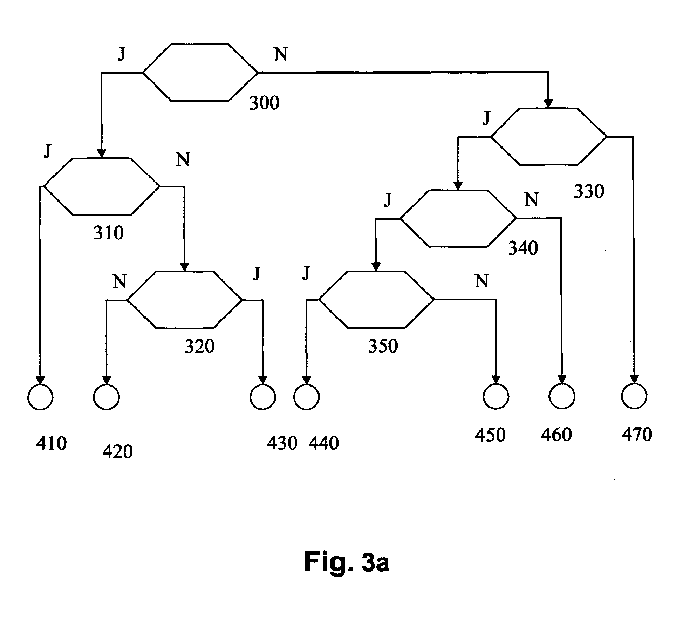

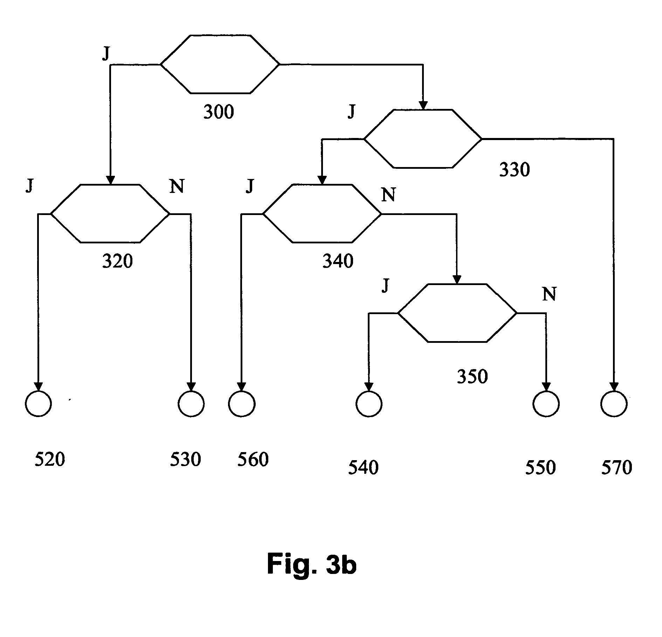

Im Folgenden wird die Massenermittlung anhand des Flussdiagramms gemäß Figur 3b näher erläutert. In verschiedenen Abfragen wird überprüft, in welchem Fahrzustand sich das Fahrzeug befindet. Diese Abfragen entsprechen den Abfragen in Figur 3a und sind auch entsprechend bezeichnet.

Erkennen die Abfragen 300 und 320, dass sich das Fahrzeug in der Ebene bewegt und der Motor ausgekuppelt ist so wird in Schritt 520 die Masse wie folgt berechnet. In diesem Zustand gilt für die Kräfte, die auf das Fahrzeug einwirken folgende Gleichungen:
0 = FT - FL - FRo
FT=M*A
FL = 0,5 *K1 * K2 (V-V0)²
FRo = K3 * M
M FL/(A - K3)

Dabei ist mit FT Massenträgheitskraft des Fahrzeugs, mit FL die Luftwiderstandskraft und mit FRo die Rollwiderstandskraft bezeichnet. Bei den Größen K1, K2 und K3 handelt es sich um Konstanten, die vorzugsweise fahrzeugspezifisch sind. Bei der Größe V handelt es sich um die aktuelle Geschwindigkeit des Fahrzeugs und bei V0 um die Geschwindigkeit des Fahrzeugs, bei der die Konstanten K1 und/oder K2 ermittelt wurden.

In der Entwicklungs- und Applikationsphase werden diese Konstanten fahrzeugspezifisch bestimmt und im Steuergerät 100 bzw. in der Überwachungseinheit 130 gespeichert, so dass nur die Fahrgeschwindigkeit die einzige Variable ist. Für den Rollwiderstand Fro wird in einer einfachen Ausgestaltung der kleinste Rollwiderstandswert angenommen. Hat das Steuergerät eine "Schlechtwegerkennung" kann der Rollwiderstandsbeiwert, das heißt die Konstante K1 entsprechend angepasst werden.

Ausgehend von der Formel für die Fahrzeugmasse M wird diese berechnet, in einem Speicher abgelegt und im folgenden Fahrzyklus verwendet. Vorteilhaft ist, wenn eine Aktualisierung auch während des Fahrzyklus erfolgt. Dies ist z.B. nach einem Fahrzeughalt auch bei laufendem Motor sinnvoll.

Erkennen die Abfragen 300 und 320, den Zustand Fahren in der Ebene mit eingekuppelten Motor und einem Fahrerbeschleunigungswunsch, so wird in Schritt 530 die Fahrzeugmasse wie folgt berechnet. In diesem Zustand gelten für die Kräfte auf das Fahrzeug folgende Gleichungen.
0 =- FT + FM - FL - FRo - FÜ
M =(FM - FÜ - FL)/(A + K3)

Dabei handelt es sich bei der Größe FM um die Motorantriebskraft und bei FÜ um die Übertragungswiderstandskraft des Triebstranges.

Die Motorantriebskraft FM wird vom Steuergerät anhand der eingespritzten Kraftstoffmenge QK berechnet. Die Triebstrangverluste FÜ werden im wesentlichen vom Übertragungswirkungsgrad des Triebstranges repräsentiert, welcher Fahrzeugspezifisch bekannt ist und als fahrzeugspezifischer Parameter behandelt, das heißt im Rahmen der Applikation ermittelt und im Steuergerät gespeichert wird.

Ausgehend von der Formel für die Fahrzeugmasse M wird diese berechnet und in einem Speicher abgelegt im folgenden Fahrzyklus verwendet. Vorteilhaft ist, wenn eine Aktualisierung auch während des Fahrzyklus erfolgt. Dies ist z.B. nach einem Fahrzeughalt auch bei laufendem Motor sinnvoll.

Erkennen die Abfragen 300 und 330 eine Bergabfahrt, so erfolgt die Berechnung der Fahrzeugmasse wie in den nachfolgend beschriebenen Zuständen.

Erkennt die Abfragen 300, 330 und 340 dass der Zustand Bergabfahrt mit eingekuppeltem Motor und Schubbetrieb vorliegt, so gelten die folgenden Gleichungen.
0 = FT + FH - FL - FRo - FÜ
S = 0,5 * KG * SIN(W) + VN * t
FH = M * KG * SIN(W)
M =(FL + FÜ)/(A +KG * SIN(W)- K3)

Dabei handelt es sich bei der Größe FH um die Hangabtriebskraft.

Bei der Größe S handelt es sich um den in der Zeit t zurückgelegten Weg. Dabei gibt VM die, durch die Raddrehzahlsensoren gemessene, Geschwindigkeit an, die bei Start der Messung der Steigungswinkel W, der auch als Gefällewinkel bezeichnet wird, vorliegt. Bei der Größe KG handelt es sich um eine Konstante.

Ausgehend von der Formel für die Fahrzeugmasse M wird diese berechnet und in einem Speicher abgelegt im folgenden Fahrzyklus verwendet. Dabei wird der Winkel W ausgehend der Formel für die Größe S bestimmt. Vorteilhaft ist, wenn eine Aktualisierung auch während des Fahrzyklus erfolgt. Dies ist z.B. nach einem Fahrzeughalt auch bei laufendem Motor sinnvoll.

Erkennen die Abfragen 300,330,340 und 350 den Zustand Bergabfahrt ausgekuppelt im Schubbetrieb, so wird im Schritt 540 die Masse wie folgt berechnet.

Die Fahrzeugmasse kann in diesem Betriebszustand wie folgt berechnet werden:
0 = FT +FH - FL - FRo
M =FL /(A +KG * SIN(W)- K3)

Ausgehend von der Formel für die Fahrzeugmasse M wird diese berechnet und in einem Speicher abgelegt und im folgenden Fahrzyklus verwendet. Vorteilhaft ist, wenn eine Aktualisierung auch während des Fahrzyklus erfolgt. Dies ist z.B. nach einem Fahrzeughalt auch bei laufendem Motor sinnvoll.

Erkennen die Abfragen 300,330,340 und 350 den Zustand Bergabfahrt ausgekuppelt und nicht im Schubbetrieb, so erfolgt im Schritt 550 in dem dargestellten Ausführungsbeispiel keine Massenberechnung.

Erkennen die Abfragen 300, 330 und 340 den Zustand Bergabfahrt eingekuppelt Fahrerbeschleunigungswunsch, so wird im Schritt 560 die Masse wie folgt berechnet.

Der Fahrer regelt durch die Pedalstellung das für die gewünschte Beschleunigung notwendige Wunschmoment. Bei fehlerhaftem Steuergerät bzw. seiner Peripherie wie Sensoren, oder Funktion bei dem es zu Einspritzungen kommt würde das Fahrzeug ungewollt beschleunigen. Wenn das Fahrzeug weiter ungewollt beschleunigt der Fahrer würde aber letztlich über das Fahrpedal regeln wollen bis er ganz vom Fahrpedal geht und das Steuergerät auf Schubbetrieb erkennt.

Die Fahrzeugmasse im korrekten Fall kann wie folgt vom Steuergerät berechnet werden:
0 = FM + FH - FT - FL - FRo - FÜ
M =(FL + FÜ - FM)/(KG * SIN(W)- K3- A)

Bei der Größe FM handelt es sich um die Motorkraft. Diese wird vom Steuergerät anhand der eingespritzten Kraftstoffmenge berechnet..

Erkennt die Abfrage 330 eine Fahrt bergauf, so erfolgt in der dargestellten Ausführungsform in Schritt 570 keine Massenberechnung. Eine Massenberechnung in den Schritten 550 und 570 ist durch eine Kombination obiger Formeln möglich.

Ausgehend von der Formel für die Fahrzeugmasse M wird diese berechnet und in einem Speicher abgelegt im folgenden Fahrzyklus verwendet. Vorteilhaft ist, wenn eine Aktualisierung auch während des Fahrzyklus erfolgt. Dies ist z.B. nach einem Fahrzeughalt auch bei laufendem Motor sinnvoll.

Bei einer weiteren Ausgestaltung kann vorgesehen sein, dass die berechnete Beschleunigung AW und/oder die gemessene Beschleunigung A1 des Beschleunigungsvektors des Sensorelementes längst zum Fahrzeug mit einer aus der gemessenen Raddrehzahländerung ermittelten Beschleunigung plausibilisiert werden.

Ferner kann bei einer Ausgestaltung vorgesehen sein, dass die berechnete und/oder gemessene Beschleunigung des Beschleunigungsvektors des Sensorelementes senkrecht zum Fahrzeug aus der Änderung des Atmosphärendrucks, der mittels des Atmosphärendruckfühlers gemessen wird, plausibilisiert werden.

Bei einer Ausgestaltung kann auch vorgesehen sein, dass keine Beschleunigungssensoren vorgesehen sind, sondern dass die Beschleunigungen aus der Raddrehzahländerung (Längsachse) und der Änderung des Atmosphärendrucks (Hochachse) berechnet werden.

## Patentansprüche

1. Verfahren zur Steuerung einer Antriebseinheit eines Fahrzeugs, bei dem ausgehend von dem Vergleich einer ersten Beschleunigungsgröße (AW), die wenigstens ausgehend vom Betriebszustand der Antriebseinheit berechnet wird, und einer zweiten Beschleunigungsgröße (A) ein Fehler erkannt wird, wobei die zweite Beschleunigungsgröße (A) eine erste Komponente (A1) in Richtung der Fahrzeuglängsachse und eine zweite Komponente (A2) senkrecht zu der Fahrzeuglängsachse beinhaltet, **dadurch gekennzeichnet, dass** die erste Beschleunigungsgröße (AW) wenigstens ausgehend von der Fahrzeugmasse (M) berechnet wird, und dass als Betriebszustand der Antriebseinheit die mittels wenigstens eines Sensors (140) gemessene zweite Beschleunigungsgröße berücksichtigt wird und wobei die Fahrzeugmasse (M) in bestimmten Betriebszuständen wenigstens ausgehend von zweiten Beschleunigungsgröße berechnet wird.

2. Verfahren nach Anspruch 1, **dadurch gekennzeichnet, dass** als Betriebszustand der Antriebseinheit wenigstens eine die eingespritzte Kraftstoffmenge (QK) charakterisierende Größe berücksichtigt wird. wird.

3. Verfahren nach Anspruch 1, **dadurch gekennzeichnet, dass** die erste und die zweite Komponente (A1, A2) mittels wenigstens eines Beschleunigungssensors (140) gemessen werden.

4. Verfahren nach Anspruch 1, **dadurch gekennzeichnet, dass** die erste Komponente (A1) mittels eines Beschleunigungssensors (140) und die zweite Komponente (A2) mittels eines Neigungssensors gemessen wird.

5. Verfahren nach Anspruch 1, **dadurch gekennzeichnet, dass** die Fahrzeugmasse (M) in bestimmten Betriebszuständen wenigstens ausgehend von der Fahrzeugbeschleunigung (A) und weiteren fahrzeugspezifischen Kenngrößen berechnet wird.

6. Vorrichtung zur Steuerung einer Antriebseinheit eines Fahrzeugs, die ausgehend von dem Vergleich einer ersten Beschleunigungsgröße (AW), die wenigstens ausgehend vom Betriebszustand der Antriebseinheit berechnet wird, und einer zweiten Beschleunigungsgröße (A) ein Fehler erkennt, mit Mitteln, die die zweite Beschleunigungsgröße (A) derart bereitstellen, dass diese eine erste Komponente (A1) in Richtung der Fahrzeuglängsachse und eine zweite Komponente (A2) senkrecht zu der Fahrzeuglängsachse beinhaltet, **dadurch gekennzeichnet, dass** Mittel vorgesehen sind, die die erste Beschleunigungsgröße (AW) wenigstens ausgehend von der Fahrzeugmasse (M) berechnen, und die als Betriebszustand der Antriebseinheit die mittels wenigstens eines Sensors (140) gemessene zweite Beschleunigungsgröße berücksichtigen und wobei die Fahrzeugmasse (M) in bestimmten Betriebszuständen wenigstens ausgehend von zweiten Beschleunigungsgröße berechnen.

## Claims

1. Method for controlling a drive unit of a vehicle, in which a fault is detected on the basis of the comparison of a first acceleration variable (AW), which is calculated at least on the basis of the operating state of the drive unit, and a second acceleration variable (A), wherein the second acceleration variable (A) includes a first component (A1) in the direction of the longitudinal axis of the vehicle, and a second component (A2) perpendicular to the longitudinal axis of the vehicle, **characterized in that** the first acceleration variable (AW) is calculated at least on the basis of the vehicle mass (M), and **in that** the second acceleration variable which is measured by means of at least one sensor (140) is taken into account as an operating state of the drive unit, and wherein the vehicle mass (M) is calculated in specific operating states at least on the basis of the second acceleration variable.

2. Method according to Claim 1, **characterized in that** at least one variable which is characteristic of the injected fuel quantity (QK) is taken into account as an operating state of the drive unit.

3. Method according to Claim 1, **characterized in that** the first and the second component (A1, A2) are measured by means of at least one acceleration sensor (140).

4. Method according to Claim 1, **characterized in that** the first component (A1) is measured by means of an acceleration sensor (140), and the second component (A2) is measured by means of an inclination sensor.

5. Method according to Claim 1, **characterized in that** the vehicle mass (M) is calculated in certain operating states at least as a function of the vehicle acceleration (A) and further vehicle-specific characteristic variables.

6. Device for controlling a drive unit of a vehicle, which detects a fault on the basis of the comparison of a first acceleration variable (AW), which is calculated at least on the basis of the operating state of the drive unit, and a second acceleration variable (A), detecting the fault with means which make available the second acceleration variable (A) in such a way that the latter includes a first component (A1) in the direction of the longitudinal axis of the vehicle and a second component (A2) perpendicular to the longitudinal axis of the vehicle, **characterized in that** means are provided which calculate the first acceleration variable (AW) at least on the basis of the vehicle mass (M), and which take into account as an operating state of the drive unit the second acceleration variable which is measured by means of at least one sensor (140), and which calculate the vehicle mass (M) in certain operating states at least on the basis of the second acceleration variable.

## Revendications

1. Procédé de commande d'un groupe propulseur d'un véhicule, selon lequel un défaut est détecté à partir de la comparaison entre une première grandeur d'accélération (AW), laquelle est calculée au moins à partir de l'état opérationnel du groupe propulseur, et une deuxième grandeur d'accélération (A), la deuxième grandeur d'accélération (A) contenant une première composante (A1) dans la direction de l'axe longitudinal du véhicule et une deuxième composante (A2) perpendiculaire à l'axe longitudinal du véhicule, **caractérisé en ce que** la première grandeur d'accélération (AW) est calculée au moins à partir de la masse du véhicule (M), et **en ce que** l'état opérationnel du groupe propulseur qui est pris en compte est la deuxième grandeur d'accélération mesurée à l'aide d'au moins un capteur (140), la masse du véhicule (M) dans des états opérationnels donnés étant calculée au moins à partir de la deuxième grandeur d'accélération.

2. Procédé selon la revendication 1, **caractérisé en ce que** l'état opérationnel du groupe propulseur qui est pris en compte est au moins une grandeur qui caractérise la quantité de carburant (QK) injectée.

3. Procédé selon la revendication 1, **caractérisé en ce que** la première et la deuxième composante (A1, A2) sont mesurées à l'aide d'au moins un capteur d'accélération (140).

4. Procédé selon la revendication 1, **caractérisé en ce que** la première composante (A1) est mesurée à l'aide d'un capteur d'accélération (140) et la deuxième composante (A2) à l'aide d'un capteur d'inclinaison.

5. Procédé selon la revendication 1, **caractérisé en ce que** dans des états opérationnels donnés, la masse du véhicule (M) est calculée au moins à partir de l'accélération du véhicule (A) et d'autres grandeurs caractéristiques spécifiques du véhicule.

6. Dispositif de commande d'un groupe propulseur d'un véhicule, qui détecte un défaut à partir de la comparaison entre une première grandeur d'accélération (AW), laquelle est calculée au moins à partir de l'état opérationnel du groupe propulseur, et une deuxième grandeur d'accélération (A), comprenant des moyens qui délivrent la deuxième grandeur d'accélération (A) de telle sorte que celle-ci contient une première composante (A1) dans la direction de l'axe longitudinal du véhicule et une deuxième composante (A2) perpendiculaire à l'axe longitudinal du véhicule, **caractérisé en ce qu'**il existe des moyens qui calculent la première grandeur d'accélération (AW) au moins à partir de la masse du véhicule (M) et qui prennent en compte comme état opérationnel du groupe propulseur la deuxième grandeur d'accélération mesurée à l'aide d'au moins un capteur (140), et qui calculent la masse du véhicule (M) dans des états opérationnels donnés au moins à partir de la deuxième grandeur d'accélération.
